# EUROPEAN PATENT APPLICATION

(11) **EP 1 935 579 A2**
(43) Date of publication of application: **25.06.2008**
(21) Application number: 07024562.6
(22) Date of filing: 18.12.2007
(51) Int. Cl.: B25J 9/16, B25J 19/06, F16P 3/12

(54) **Robot system able to secure worker safety**

(30) Priority: 21.12.2006 JP 2006344446
(71) Applicant: FANUC LTD, Minamitsuru-gun, Yamanashi 401-0597 (JP)
(72) Inventor: Hashimoto, Yoshiki, Yamanashi 401-0597 (JP); Kubo, Yoshiyuki, Yamanashi 401-0597 (JP)
(74) Representative: Thum, Bernhard

(57) **Abstract**

A robot (24) of a robot system (10) performs a desired operation by an operation motor (26) and moves along a route (22) by a movement motor (28). The robot system (24) includes a robot power cutoff device (42) for cutting off the power supply to the operation motor (26) when making the robot (24) move from one station (12) to another station (14) across the worker passage (16), a cutoff state monitoring device (42b) for monitoring the cutoff state of the power supply to the operation motor (26), and an emergency stop device (40,44). The emergency stop device (40,44) cuts off the power supply to the movement motor (28) so as to make the robot (24) stop on an emergency basis, when it is detected that the power supply to the operation motor (26) has not been cut off and the robot (24) enters the predetermined section above the worker passage (16).

## Description

### RELATED APPLICATIONS

The present application is based on, and claims priority from Japanese Application No. 2006-344446, filed December 21, 2006, the disclosure of which is hereby incorporated by reference herein in its entirety.

### BACKGROUND OF THE INVENTION

### 1. Field of the Invention

The present invention relates to a robot system designed to secure worker safety in the case when moving a robot between different stations across the top of a worker passage provided between the different stations.

### 2. Description of the Related Art

In production plants etc., there are pluralities of stations such as stations provided with machining centers and other machine tools for performing various types of processing steps and pallet stations for placing thereon workpieces before processing or after processing. Further, in general, each station is provided with a robot for loading and unloading workpieces, that is, performing handling work. In this production system, sometimes a gantry provided with a traveling rail is installed so as to stretch above a plurality of stations and a single robot is made to move along the traveling rail thereby to enable use of a single robot in common for a plurality of stations. If using a single robot in common for a plurality of stations in this way, while a machine tool is performing processing at one station, the robot can perform work at another station. Therefore, this is advantageous in that the robot can be efficiently utilized. Further, by conveying a robot holding a workpiece to make it move between individual stations, it also becomes possible to automate the conveyance of a workpiece between stations.

In the above type of production system, adjoining stations sometimes are provided with a passage for a worker to pass through for conveying materials or maintenance of machinery. In this case, it becomes important to ensure safety so that the robot passing above the passage does not endanger the worker. Specifically, it is required to ensure a state where operation is safely stopped so as to prevent a moving robot from operating above a passage and ensure a posture so that when a robot cuts across the top of a passage, the robot will not contact a worker or peripheral equipment. Here, the "operation" of the robot means an action of the robot other than movement.

One method for ensuring that a robot does not operate above a passage is to cut the supply of power for robot operation before the robot cuts across the top of a passage so as to make the operation of the robot safely stop, then making it cut across the top of the passage. In this case, in order to avoid the function of cutting off the supply of power to the robot from being deactivated due to a breakdown etc., an extremely high reliability is required for the control circuit for cutting off the power supply. For example, a reliability corresponding to category 4 defined in ISO 13849-1 becomes necessary. In order to secure safety meeting this requirement, it is necessary to configure the circuit for stopping the robot using parts where safety is ensured such as a safety programmable logic controller (hereinafter referred to as a "safety PLC") or a safety relay (forced guide type relay).

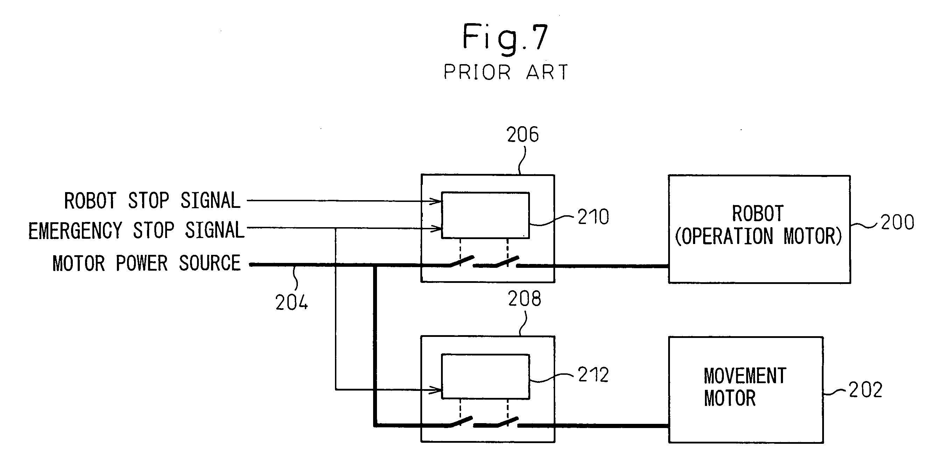

FIG. 7 shows an example of this prior art (Prior Art 1). In Prior Art 1 shown in FIG. 7, a power line 204 supplying power to an operation motor 200 for making a robot perform a desired operation and a movement motor 202 for making the robot move along a route has dedicated emergency stop circuits 206 and 208 connected to it. When the operation motor 200 and movement motor 202 is made safely stop, the electromagnetic contactors 210 and 212 in the emergency stop circuits 206 and 208 are opened to cut the power supply to the motors 200 and 202. Note that in this example, the emergency stop circuits 206 and 208 use two electromagnetic contactors in order to secure safety and these two electromagnetic contactors are opened and closed controlled by a safety relay circuit.

Further, for the purpose of securing safety of a worker entering a worker passage or other no-entry region where entry of the worker during operation of a device is prohibited, Japanese Unexamined Patent Publication No. 2004-122258 discloses a robot system including a robot and a device driven by a servo motor and performing work in cooperation with the robot, which robot system further includes a detecting means for detecting the approach of a worker to the device or the entry of a worker into a no-entry region for the device, a cutoff means for connecting and cutting off the supply of power to the servo motor driving the device, an emergency stopping means for receiving from the detecting means a notification of worker approach or entry and setting the robot system to an emergency stop state, and an invalidating means for monitoring the connection/cutoff state of the supply of power to the servo motor driving the device and invalidating the notification from the detecting means to the emergency stopping means when the supply of power is cut off (Prior Art 2).

In the Prior Art 1 shown in FIG. 7, before the robot cuts across the tope of the passage, only the supply of power to the operation motor for making the robot operate is cut off in accordance with the robot stopping signal, while the supply of power to the movement motor is continued. For this reason, in the event that a breakdown causes the robot stopping signal to no longer be output or the operation of the robot not to be able to be stopped in accordance with the robot stopping signal, the robot will enter the passage in the operable state and worker safety will be threatened. Therefore, the circuit for outputting the robot stopping signal or the circuit for stopping the operation of the robot, like the circuit for outputting the emergency stop signal, requires a high reliability. The circuit fro outputting the robot stopping signal and the circuit for stopping the operation of the robot are required to use safety PLCs, safety relays, and other expensive equipment, which increase the cost for robot system. Further, for the unlikely instances where the robot enters the passage in an operable state, in addition to the emergency stop device for robot itself (that is, the operation motor), an emergency stop device for the robot movement motor also has to be provided. This leads to a further rise in costs.

Further, Prior Art 2 cuts off the power of the device only when a worker approaches a device or a no-entry region. Therefore, realization of a robot system allowing a worker to go back and forth along a worker passage without regard as to the state of the robot or peripheral equipment has been desired.

### SUMMARY OF THE INVENTION

Accordingly, an object of the present invention is to solve the above problems of the prior arts and enable a worker to go back and forth along a worker passage located between stations without regard as to the state of the robot or peripheral equipment by an inexpensive and simple structure.

In order to achieve the above object, according to the present invention, there is provided a robot system able to secure worker safety, which includes a route extending across a plurality of stations above the plurality of stations, and a robot having an operation motor and a movement motor and adapted to perform a desired operation by the operation motor and move along the route by the movement motor, the robot moving along the route and cutting across a worker passage located between adjoining stations to move between the plurality of stations, wherein the robot system further includes a robot power cutoff device for cutting off a power supply to the operation motor while continuing a power supply to the movement motor when the robot is made to move from one of the stations to another station, a cutoff state monitoring device for monitoring a cutoff state of the power supply to the operation motor, and an emergency stop device for making the operation motor and the movement motor stop on an emergency basis, the emergency stop device cutting off the power supply to the movement motor so as to make the movement motor stop on an emergency basis when the fact that the power supply to the operation motor is not cut off is detected by the cutoff state monitoring device and the robot enters a predetermined section of the route including a section above the worker passage.

In the above robot system, the cutoff state of the power supply to the operation motor for making the robot perform a desired operation is monitored by the cutoff state monitoring device. If the robot enters the worker passage when the power supply to the operation motor is not cut off, the power supply to the movement motor is cut off to make the robot stop on an emergency basis. Therefore, even if not using a high safety expensive safety PLC, safety relay, etc., the robot can be reliably prevented from cutting across the worker passage in an operable state. Further, the entry of the robot into the worker passage in the operable state is prevented regardless of whether the worker approaches or enters the worker passage. Consequently, worker safety is secured.

Preferably, the emergency stop device includes a robot position detection device for outputting an emergency stop signal when detecting that the robot is positioned in the predetermined section, a system power cutoff device for cutting off the power supply to the operation motor and the movement motor in accordance with an emergency stop signal so as to stop the operation motor and the movement motor, and an emergency stop signal invalidation device for invalidating the emergency stop signal from the robot position detection device to the system power cutoff device while the power supply to the operation motor is cut off by the robot power cutoff device. If the emergency stop device is configured in this way, when the robot enters a predetermined section of the route including the section above the worker passage and an emergency stop signal is issued, the emergency stop signal is invalidated, power is supplied to the movement motor, and the robot is allowed to cut across the worker passage only when the power supply to the operation motor is actually cut off. On the other hand, when the power supply to the operation motor is not cut off, the emergency stop signal becomes valid and the power supply to the operation motor and movement motor is cut off. As a result, the robot can no longer move and the robot can be prevented from entering the work passage in the operable state. Therefore, even if the control device etc. breaks down and cannot issue a cutoff command to the robot power cutoff device or the robot power cutoff device itself breaks down and cannot cut off the power supply to the operation motor, worker safety can be secured.

Preferably, the robot system further includes a safe posture maintaining device for maintaining the robot at a predetermined safe posture while the robot is passing through the predetermined section, and a robot posture detection device for detecting whether or not the robot is in a safe posture when the robot is passing through the predetermined section, the robot posture detection device outputting an emergency stop signal to the system power cutoff device to cut off the power supply to the operation motor and the movement motor when detecting that the robot is not in a safe posture. If the robot system is configured in this way, the worker passage can be passed through only when the robot is in a safe posture wherein injury is not given to the worker and therefore worker safety is improved.

For example, the robot posture detection device may be a light curtain provided in the worker passage so as to be interrupted when the robot not in a safe posture cuts across the worker passage. Further, the robot posture detection device may be configured to compare a posture of the robot determined from angle information of axes of the robot when the robot passes through the predetermined section and a safe posture stored in advance and output an emergency stop signal to the system power cutoff device when judging that the posture of the robot differs from the posture stored in advance. Further, the robot posture detection device may be configured so that the comparison of the posture of the robot and the predetermined safe posture is performed independently by a plurality of the processing devices when the robot passes through the predetermined section and so that an emergency stop signal is output to the system power cutoff device when any processing device judges that the posture of the robot differs from the safe posture stored in advance.

According to the present invention, if trying to enter the worker passage when the power supply to the operation motor is not cut off, the power supply to the movement motor is cut off and the robot is made to make an emergency stop. Therefore, even if a high safety, expensive safety PLC, safety relay, etc. is not used, the robot can be reliably prevented from cutting across the worker passage in an operable state. Further, the robot is prevented from entering the worker passage in the operable state regardless whether or not a worker has approached or entered the worker passage. Consequently, worker safety is secured.

### BRIEF DESCRIPTION OF THE DRAWINGS

The above and other objects, features and advantages of the present invention will be described in more detail below based on the preferred embodiments of the present invention with reference to the accompanying drawings, wherein:
FIG. 1 is a view of the overall configuration of an embodiment of a robot system enabling worker safety to be secured according to the present invention;
FIG. 2 is a functional block diagram of a power supply circuit of the robot system of FIG. 1;
FIG. 3 is a flow chart showing the procedure for making a robot of a robot system of the embodiment of FIG. 1 move between stations;
FIG. 4 is a block diagram showing an embodiment of a robot posture detection device able to be used in the robot system of the present invention;
FIG. 5 is a block diagram showing another embodiment of a robot posture detection device able to be used in the robot system of the present invention;
FIG. 6 is a flow chart showing the procedure for making a robot of a robot system provided with the robot posture detection device shown in FIG. 4 or FIG. 5 move between stations; and
FIG. 7 is a view of the configuration of a conventional power supply circuit of a robot system.

### DETAILED DESCRIPTION OF THE INVENTION

The robot system according to the present invention will be described below with reference to the drawings.

In the robot system 10 according to the present invention, a plurality of stations including a first station 12 and a second station 14 are provided. Further, between the first station 12 and the second station 14, a worker passage 16 for allowing passage by a worker for conveying materials or maintaining the machinery is provided. The worker passage 16 is partitioned from the stations 12 and 14 by safety fences 18 of heights exceeding the head of the worker. The stations 12 and 14 are, for example, regions where a machining center or other machine tool processes a workpiece or pallet regions for placing thereon workpieces before processing and after processing. Further, above the stations 12 and 14, a gantry 20 extending across a plurality of stations is provided. The gantry 20 is provided with a traveling rail or other route 22 extending in a horizontal direction along a longitudinal direction of the gantry 20. The robot 24 can be made to move along this route 22.

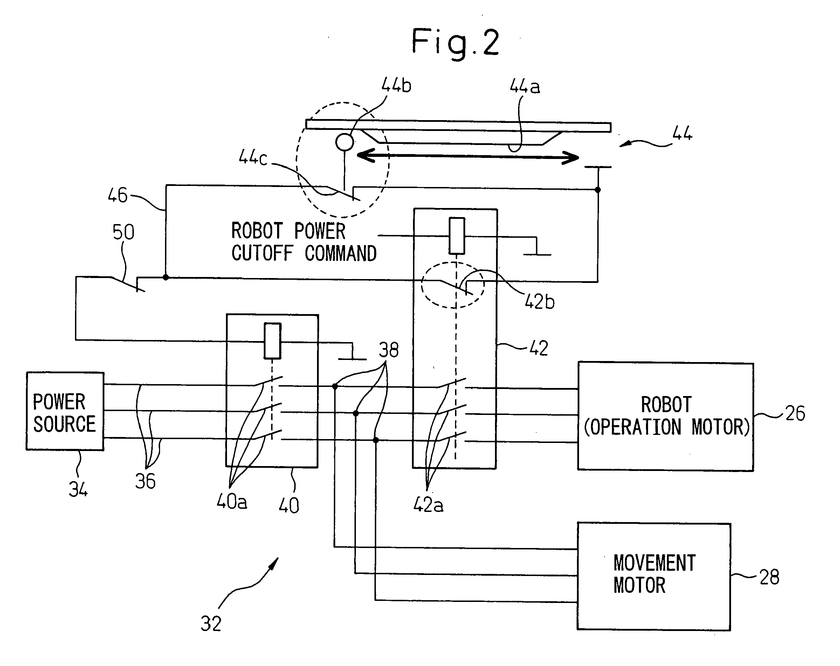

The robot 24 is configured by a robot arm etc. able to load or unload workpieces to or from machine tools installed at the stations 12 and 14, place the workpieces on pallets, and perform other handling work. Further, the robot 24 is provided with an operation motor 26 (see FIG. 2) for driving the axes so as to perform handling work and other desired operations and also a movement motor 28 (see FIG. 2). By making this movement motor 28 operated, the robot 24 can be made to move along the route 22. In this way, the robot 24 can be made to move along the route 22 extending across a plurality of stations 12 and 14. Therefore, by making the robot 24 move between different stations 12 and 14 in the state holding a workpiece, it becomes possible to automatically convey a workpiece between the stations 12 and 14. Note that the operation and movement of the robot 24 are controlled by a control device 30. Here, the operation of the robot herein means an action of the robot other than movement along the route 22.

Next, referring to FIG. 2, an embodiment of a power supply circuit 32 used in the robot system of the present invention 10 will be described. The operation motor 26 and movement motor 28 of the robot 24 are connected to power supply lines 36 extending from a single power source 34 and branched at the branching points 38. Power is supplied through the power supply lines 36 to the operation motor 26 and movement motor 28 of the robot 24. In FIG. 2, as the power source 34, a three-phase power source is being used, and therefore three power supply lines 36 extend between the power source 34 and the operation motor 26 and movement motor 28, respectively. On the power supply lines 36, a first electromagnetic contactor 40 is provided before the branching points 38, that is, on the power source 34 sides of the branching points. Furthermore, between the branching points 38 and the operation motor 26, a second electromagnetic contactor 42 is provided. That is, the first electromagnetic contactor 40 forms a system power cutoff device able to control the cutoff and connection of the power supply from the power source 34 to the operation motor 26 and movement motor 28 of the robot 24, and the second electromagnetic contactor 42 forms a robot power cutoff device able to control the cutoff and connection of the power supply from the power source 34 to only the operation motor 26 of the robot 24.

Further, the route 22 is provided with a robot position detection device 44 for detecting when the robot 24 moves to a predetermined section of the route 22 including the section above the worker passage 16. The robot position detection device 44, for example, as shown in FIG. 2, is comprised of a dog 44a provided at the predetermined section of the route 22 including the section above the worker passage 16 and a limit switch 44b provided at the robot 24 and configured to open a contact 44c when contacting the dog 44a. While the robot 24 is moving through the predetermined section, the contact 44c of the limit switch 44b opens to cut the signal line of the operating signal circuit 46 and cut off the operating signal, whereby the robot 24 having reached the section above the worker passage 16 is detected. The limit switch 44b is preferably one having a structure forcibly mechanically opening the contact 44c by the dog 44a.

The above operating signal circuit 46 is connected to a system power cutoff device comprised of the first electromagnetic contactor 40. When the robot position detection device 44 detects that the robot 24 has reached a predetermined section of the route 22, the circuit no longer outputs an operating signal to the first electromagnetic contactor 40. When the first electromagnetic contactor 40 no longer receives an operating signal from the operating signal circuit 46, the contacts 40a are opened thereby to cut the power supply lines 36 extending from the power source 34. As a result, the power supply to the operation motor 26 and movement motor 28 of the robot 24 is cut off, thereby making the robot system 10 stop on an emergency basis. That is, the state where no operating signal is output from the operating signal circuit 46 corresponds to the state where an emergency stop signal is being output. In the embodiment shown in FIG. 2, when the robot 24 reaches the predetermined section of the route 22, the dog 44a opens the contact 44c of the limit switch 44b and thereby cuts the operating signal line. As a result, the operating signal can no longer reach from the operating signal circuit 46 to the first electromagnetic contactor 40. In accordance with this, the contacts 40a of the first electromagnetic contactor 40 open. Note that in the embodiment shown in FIG. 2, a single electromagnetic contactor 40 is used to form the system power cutoff device, but in accordance with the level of safety required in the robot system 10, two or more electromagnetic contactors can be used to form the system power cutoff device as well.

The second electromagnetic contactor 42 is configured to open the main contacts 42a in accordance with a robot power cutoff command and cut off only the power supply to the operation motor 26 of the robot 24. The robot power cutoff command is output from a sequencer or other control device 30 controlling the robot system 10 as a whole when making the robot 24 move from one of the stations 12 and 14 to the other station 14 or 12. Further, the second electromagnetic contactor 42 is provided with, separate from the main contacts 42a, an interlocked contact 42b operating interlocked with the main contacts 42a. The interlocked contact 42b of the second electromagnetic contactor 42 is used as a cutoff state monitoring device for the second electromagnetic contactor 42. The interlocked contact 42b is configured so that it is closed when the main contacts 42a of the second electromagnetic contactor 42 is opened and the power supply to the operation motor 26 of the robot 24 is cut off, while it is opened when the main contacts 42a is closed and the power can be supplied to the operation motor 26. As the second electromagnetic contactor 42, in the above way, one which guarantees by the internal structure that the main contacts 42a will be open when the interlocked contact 42b is closed is used. Electromagnetic contactors having such characteristics are general types and can be inexpensively obtained.

The interlocked contact 42b of the second electromagnetic contactor 42 is connected in parallel to the contact 44c of the limit switch 44b in the above-mentioned operating signal circuit 46. Therefore, even in the case of the state where the contact 44c of the limit switch 44b is opened, when the main contacts 42a of the second electromagnetic contactor 42 is opened and the interlocked contact 42b is closed, the operating signal reaches the first electromagnetic contactor 40. That is, the interlocked contact 42b of the second electromagnetic contactor 42 functions to invalidate an emergency stop signal generated by the contact 44c of the limit switch 44b opening while the main contacts 42a of the second electromagnetic contactor 42 is opened and the power supply to the operation motor 26 of the robot 24 is cut off.

In this way, in the operating signal circuit 46, the robot position detection device 44 and the system power cutoff device (the first electromagnetic contactor 40) form the emergency stop device.

Here, the operation of the above power supply circuit 32 will be described. When the robot 24 stays at one station 12 or 14 etc. and the control device 30 otherwise does not output a robot power cutoff command, the main contacts 42a of the second electromagnetic contactor 42 are closed, power is supplied to the operation motor 26, and the robot 24 can operate. At this time, the interlocked contact 42b of the second electromagnetic contactor 42 becomes open and the function to invalidate the emergency stop signal does not operate. When in this state the robot 24 moves along the route 22 and reaches the section above the worker passage 16 or a predetermined section of the route including this (that is, the section where the dog 44a is provided), the dog 44a causes the contact 44c of the limit switch 44b to open and the operating signal circuit 46 no longer outputs an operating signal, that is, an emergency stop signal is issued. This being the case, the contacts 40a of the first electromagnetic contactor 40 is opened, the power supply lines 36 are cut. As a result, the power supply to the operation motor 26 and movement motor 28 is cut off and the robot system 10 enters an emergency stop state.

On the other hand, when making the robot 24 move from one of the stations 12 or 14 to the other station 14 or 12 etc. or otherwise when the control device 30 is outputting the robot power cutoff command, the main contacts 42a of the second electromagnetic contactor 42 open, the power supply to the operation motor 26 is cut off, and the robot 24 can no longer operate. At this time, the interlocked contact 42b of the second electromagnetic contactor 42 is closed. Since the interlocked contact 42b of the second electromagnetic contactor 42 is connected in parallel to the limit switch 44b in the operating signal circuit 46, the operating signal circuit 46 outputs an operating signal while the interlocked contact 42b is closed, even if the contact 44c of the limit switch 44b opens. Therefore, while the second electromagnetic contactor 42 opens its main contacts 42a and cuts off the power supply to the operation motor 26 in accordance with a robot power cutoff command, even if the robot 24 enters the section above the worker passage 16 or the predetermined section of the route 22 including this and the contact 44c of the limit switch 44b is opened by the dog 44a, the robot will not enter the emergency stop state. Therefore, the movement motor 28 can operate and the robot 24 is allowed to move along the route 22 cutting across the top of the worker passage 16.

Further, in the case that the robot power cutoff command is not suitably output from the control device 30 due to breakdown of the control device 30 etc. when the power supply to the operation motor 26 of the robot 24 should be cut off to disable the operation of the robot 24 for the purpose of preparation for making the robot 24 move from one of the stations 12 or 14 to the other station 14 or 12, the main contacts 42a of the second electromagnetic contactor 42 remain closed and the power supply to the operation motor 26 is not cut off. As described above, as the second electromagnetic contactor 42, one which guarantees that the main contacts 42a are opened when the interlocked contact 42b is closed is used. Therefore, when the main contacts 42a of the second electromagnetic contactor 42 are closed, the interlocked contact 42b is always open. At the time of this state, when the robot 24 moves along the route 22 and reaches the section above the worker passage 16 or the predetermined section of the route 22 including this (that is, the section where the dog 44a is provided), the dog 44a opens the contact 44c of the limit switch 44b. At this time, as described above, the interlocked contact 42b of the second electromagnetic contactor 42 is open. Therefore, when the contact 44c of the limit switch 44b becomes open, the operating signal circuit 46 can no longer output the operating signal, that is, an emergency stop signal is issued. This being so, the contacts 40a of the first electromagnetic contactor 40 are opened, the power supply lines 36 are cut. As a result, the power supply from the power source 34 to the operation motor 26 and movement motor 28 of the robot 24 is cut off and the operation motor 26 and movement motor 28 immediately enter the emergency stopped state. Therefore, even if the control device 30 breaks down and a robot power cutoff command can no longer be suitably output, worker safety is ensured.

Not only when the control device 30 breaks down and the robot power cutoff command can no longer be output, but also when the main contacts 42a of the second electromagnetic contactor 42 fuse and remain closed, the interlocked contact 42b is opened. Therefore, in this case as well, if the robot 24 moves along the route 22 and reaches the section above the worker passage 16 or the predetermined section of the route 22 including this (that is, the section where the dog 44a is provided) and the dog 44a causes the contact 44c of the limit switch 44b to open, the operating signal circuit 46 can no longer output the operating signal and the power supply to the operation motor 26 and movement motor 28 of the robot 24 is cut off and the two, that is, the robot system 10, immediately enters the emergency stop state. Therefore, worker safety is secured.

Furthermore, if using, as the limit switch 44b, one of a structure using the dog 44a to mechanically forcibly open the contact 44c, the contacts 44c of the limit switch 44b is forcibly opened by the mechanical force due to the dog 44a even if the contact 44c of the limit switch 44b fuses, whereby safety is secured. Further, since switches with such mechanical contact mechanisms can be inexpensively obtained, the cost will not be greatly increased.

In this way, if using the power supply circuit 32 shown in FIG. 2, the robot can move and cutting across the top of the worker passage 16 is allowed only when the main contacts 42a of the second electromagnetic contactor 42 open in accordance with the robot power cutoff command output from the control device 30 and the robot 24 is unable to operate. As a result, the robot 24 is prevented from cutting across the top of the worker passage 16 in the operable state. Therefore, the safety of a worker passing through the worker passage 16 is secured. Further, an extremely high safety robot system 10 can be built by inexpensive parts alone without using any safety PLCs, safety relays, or other expensive parts. Furthermore, a single emergency stop device is used in common for both the operation motor 26 and movement motor 28 of the robot 24. This contributes to reduction of the costs.

Preferably, between the first electromagnetic contactor 40 and the operating signal circuit 46 having the contact 44c of the limit switch 44b and the interlocked contact 42b of the second electromagnetic contactor 42 connected in parallel, there is provided a contact 50 interlocked with the results of detection of a robot posture detection device 48 so as to open when it is detected that the robot 24 is not in a safe posture (that is, when it is detected that the robot 24 is in a posture other than a safe posture) and close only when the robot 24 is in a safe posture. Here, the "safe posture" means a posture whereby the robot 24 will not pass below the height required for securing safety of the worker passing through the worker passage 16 when the robot 24 cuts across the top of the worker passage 16.

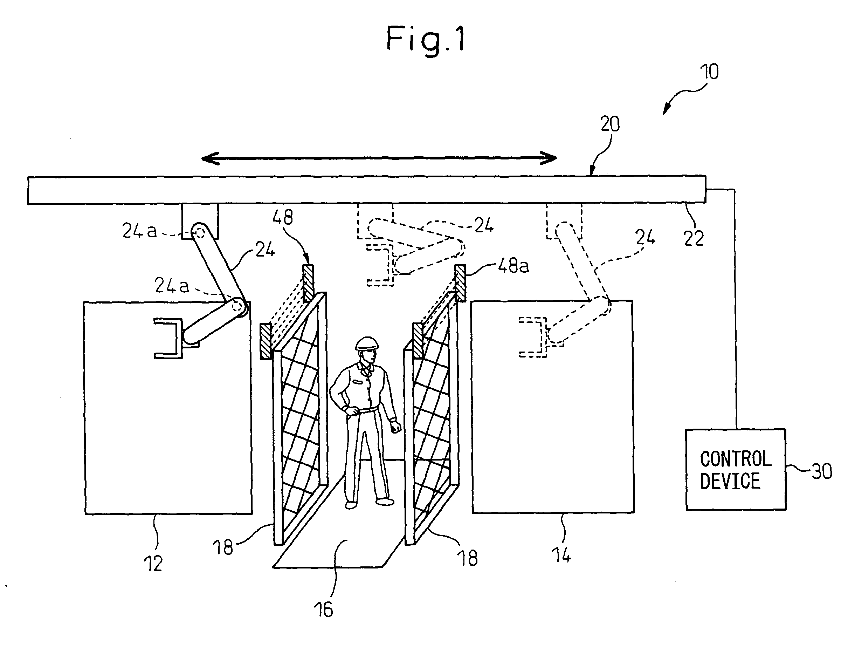

If such a robot posture detection device 48 (FIG. 1) and contact 50 interlocked with this are provided, when the robot 24 passes above the worker passage 16 not in a safe posture state, the contact 50 of the operating signal circuit 46 is opened to cut off the operating signal, and the operating signal no longer reaches the first electromagnetic contactor 40 from the operating signal circuit 46. As a result, the first electromagnetic contactor 40 opens the contacts 40a, cuts off the power supply to the operation motor 26 and movement motor 28 of the robot 24, and makes the robot enter the emergency stop state. Therefore, the robot 24 can be prevented from cutting across the top of the worker passage 16 not in the safe posture state, and the robot 24 can be guaranteed to be in a safe posture when the robot 24 passes above the worker passage 16. Consequently, the safety of the worker passing through the worker passage 16 can be further raised. Note that the robot 24 is designed to enable actuation of a mechanical brake 24a for each axis or joint so as to enable a safe posture to be maintained even in a state where the power supply to the operation motor 26 is cut off. That is, these brakes 24a function as safe posture maintaining devices for maintaining the robot 24 at a safe posture while the robot 24 is passing above the worker passage 16.

In the embodiment shown in FIG. 1, in the region where the robot 24 cuts across the top of the worker passage 16, light curtains 48a are provided along the top edges of the top parts of the safety fences 18 partitioning the stations 12 or 14 from the worker passage 16. The light curtains 48a provided in this way are interrupted by the robot 24 when the robot 24 passes above the worker passage 16 by a dangerous height where it might contact a worker in the worker passage 16 or the safety fences 18. Therefore, the light curtains 48a can detect when the robot 25 is not in a safe posture (that is, the robot 24 is in a posture other than a safe posture). On the other hand, when the light curtains 48a are not interrupted, it means the robot 24 passes above the dangerous height where it might contact a worker in the worker passage 16 or the safety fences 18 and therefore it is judged that the robot is in a safe posture. In this way, the light curtains 48a of FIG. 1 can detect if the robot 24 is in a safe posture or not. Therefore, if the relationship between the light curtains 48a and the corresponding contact 50 is set so that the contact is closed when the light curtains 48a are not interrupted and the corresponding contact 50 is opened when the light curtains 48a are interrupted, the light curtains 48a of FIG. 1 function as the above-mentioned robot posture detection device 48.

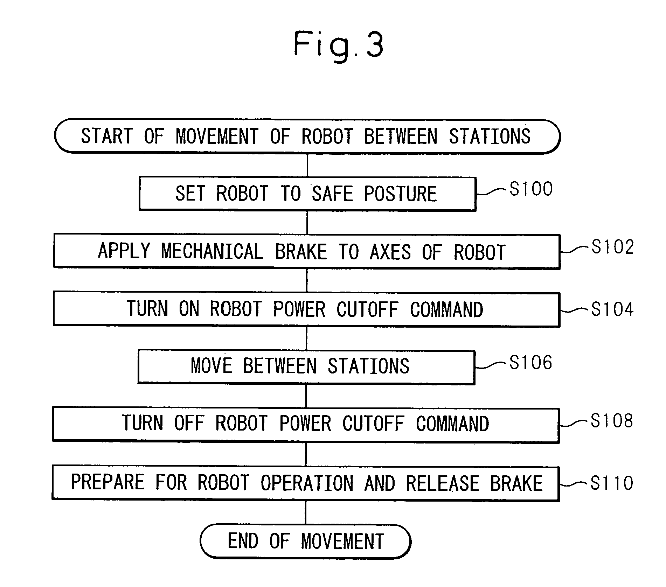

Next, referring to FIG. 3, the procedure by which the robot 24 of the robot system 10 shown in FIG. 1 moves between the stations 12 and 14 will be described.

In order to avoid collections with workers or other equipment such as safety fences 18, the control device 30 of the robot system 10 makes the robot 24 adopt a predetermined safe posture (for example, as shown in FIG. 1, a posture where the joints of the robot arm are deeply bent) before moving from one of the stations 12 or 14 to the other station 14 or 12 (step S100). Next, a mechanical brake 24a is applied to each axis or joint of the robot 24 so that the posture of the robot 24 will not change due to gravity, vibration at the time of movement, or other outside force, even in a state where the power supply to the operation motor 26 of the robot 24 is cut off (step S102).

Next, the control device 30 of the robot system 10 issues a robot power cutoff command to the second electromagnetic contactor 42 to cut off the power supply from the power source 34 to the operation motor 26 of the robot 24, and disables operation of the robot 24 (step S104). After that, it issues a movement command to the movement motor 28 of the robot 24 to drive the robot 24, and makes the robot 24 move from one of the stations 12 or 14 to the other station 14 or 12 along the route 22 in the disabled operation state (step S106). When the robot posture detection device 48 detects, during movement, that the power supply to the operation motor 26 is not cut off and the robot 24 is in the operable state or the robot 24 is not in a safe posture (the robot 24 has posture other than safe posture), the operation motor 26 and movement motor 28 of the robot 24 are made to stop on an emergency basis, as explained above. Consequently, the safety of a worker in the worker passage 16 is secured.

When the robot 24 passes the section of the dog 44a of the route 22 and reaches the next station 14 or 12, the control device 30 lifts the robot power cutoff command to the second electromagnetic contactor 42 to close the main contacts 42a and restart the power supply from the power source 34 to the operation motor 26 (step S108), releases the mechanical brake 24a of each axis or joint of the robot 24 (step S110), sets the robot 24 to the operable state, and ends the movement of the robot 24 between the stations 12 and 14.

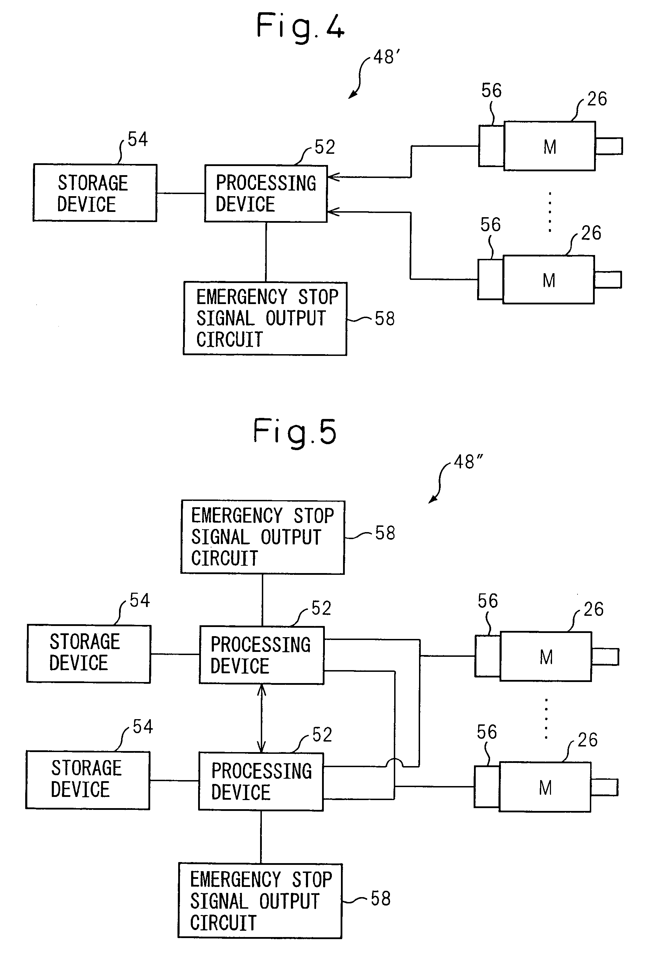

FIG. 4 shows the robot posture detection device 48' of another embodiment used in the robot system 10 of FIG. 1. The robot posture detection device 48' of this embodiment is comprised of a CPU or other processing device 52, a nonvolatile memory or other storage device 54 connected to the same, position detectors 56 attached to operation motors 26 for driving axes or joints of the robot 24, and an emergency stop signal output circuit 58 for opening/closing the contact 50 of the operating signal circuit 46. The control device 30 controls the position (angle) and speed of each axis of the robot 24 based on the angle information detected by the position detector 56 attached to the operation motor 26 for each axis of the robot 24. Therefore, it is possible to find the posture of the robot 24 based on the angle information detected by the position detector 56 attached to the operation motor for each axis.

The storage device 54 stores the angle information of each axis for when the robot 24 is in a safe posture. The processing device 52 compares the current angle information of the axes from the position detectors 56 and the angle information of the axes at the time of the safe posture stored in the storage device 54. When the difference between the two is within the range of a predetermined allowable value, it judges that the robot 24 is in a safe posture, while when it is over the range of the allowable value, it judges that the robot 24 is not in a safe posture (that is, in a posture other than a safe posture). Further, when the processing device 52 judges that the robot 24 is in a safe posture, the corresponding contact 50 of the operating signal circuit 46 is left in the closed state. On the other hand, when the processing device 52 judges that the robot 24 is not in a safe posture, the corresponding contact 50 of the operating signal circuit 46 is opened by the emergency stop signal output circuit 58, so that no operating signal is output from the operating signal circuit 46, the first electromagnetic contactor 40 cuts the power supply from the power source 34 to the operation motor 26 and movement motor 28, and the robot system 10 is made to enter an emergency stop state.

FIG. 5 shows a robot posture detection device 48" of another embodiment similar to the robot posture detection device 48' shown in FIG. 4. It differs from the robot posture detection device 48' shown in FIG. 4 in that two sets of the processing device 52 such as a CPU and the storage device 54 and emergency stop signal output circuit 58 connected to the same are provided. The two processing devices 52 monitor each other's operating state. When one processing device 52 detects an abnormality in the other, it issues an alarm and opens the contact 50 of the operating signal circuit 46 through the emergency stop signal output circuit 58 to make the robot system 10 stop on an emergency basis. Since the content of the processing at each processing device 52 is similar to the processing device 52 shown in FIG. 4, it will not be described in detail here.

When two processing devices 52 are used to detect the posture of the robot 24 in this way, even if one of the processing devices 52 breaks down, the other processing device 52 is used to detect whether the robot 24 is in a safe posture. Therefore, it is possible to construct an extremely high reliability emergency stop device. Further, since the storage device 54 connected to each processing device 52 is separately provided, there is also the advantage of a higher reliability. Note that in this embodiment, it is of course possible to provide three or more sets of the processing device 52 and the storage device 54 and emergency stop signal output circuit 58 connected to the same.

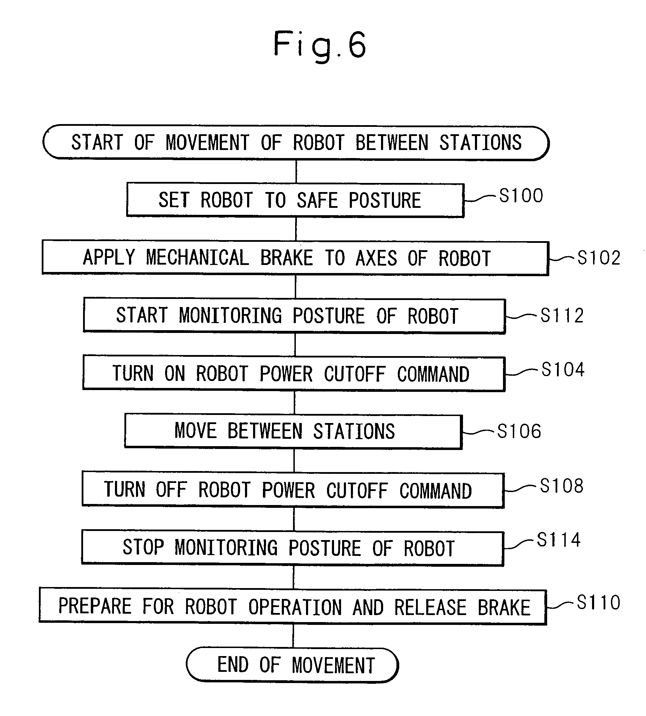

When making the robot 24 move between the stations 12 and 14 in the robot system 10 using the robot posture detection device 48' or 48" shown in FIG. 4 or FIG. 5, it is sufficient to start the operation of the robot posture detection device 48' or 48" before making the robot 24 move from one of the stations 12 or 14, make the robot 24 move to the other stations 14 or 12, and then stop the operation of the robot posture detection device 48' or 48". This can avoid emergency stop of the robot during work at the station 12 or 14 on the ground that the robot 24 is judged not to be in a safe posture. For example, as shown in FIG. 6, in a procedure similar to FIG. 3, it is sufficient that to start the operation of the robot posture detection device 48 or 48" (step S112) after the step of applying a mechanical brake 24a to each axis of the robot 24 (step S102) and to end the operation of the robot posture detection device 48' or 48" (step S114) after the step of making the robot 24 move between the stations 12 and 14 (step S106). The rest of the procedure in FIG. 6 is the same as the procedure shown in FIG. 4, and therefore will not be described in detail here.

Although the robot system 10 according to the present invention has been described above based on the illustrated embodiments, the present invention is not limited to the illustrated embodiments. For example, in the embodiment shown in FIG. 1, a dog 44a provided so as to extend across the predetermined section of the route 22 and a limit switch 44b are used to detect when the robot 24 is positioned in a predetermined section of the route 22. However, it is also possible to provide dogs or light curtains etc. at both ends of the predetermined section of the route 22 to detect the passage of the boundaries of the section.

Further, in the embodiment of FIG. 1, light curtains 48a are provided along the top edges of the safety fences 18. However, in addition to the light curtains 48a provided along the top edges of the safety fences 18, it is also possible to provide another light curtain at the worker passage 16 below the route 22 in a direction cutting across it so as to enable detection of a worker entering the worker passage 16 below the route 22 and to make the operation motor 26 and movement motor 28 of the robot 24 stop on an emergency basis when detecting the presence of the worker.

## Claims

1. A robot system (10) able to secure worker safety, comprising a route (22) extending across a plurality of stations (12, 14) above said plurality of stations (12, 14), and a robot (24) having an operation motor (26) and a movement motor (28) and adapted to perform a desired operation by said operation motor (26) and move along said route (22) by said movement motor (28), said robot (24) moving along said route (22) and cutting across a worker passage (16) located between adjoining stations (12, 14) to move between the plurality of stations (12, 14), said robot system (10) **characterized in that** said robot system (10) further comprises:
a robot power cutoff device (42) for cutting off a power supply to said operation motor (26) while continuing a power supply to said movement motor (28) when said robot (24) is made to move from one of the stations (12; 14) to another station (14; 12);
a cutoff state monitoring device (42b) for monitoring a cutoff state of the power supply to said operation motor (26); and
an emergency stop device (40, 44) for making said operation motor (26) and said movement motor (28) stop on an emergency basis,
said emergency stop device (40, 44) cutting off the power supply to said movement motor (28) so as to make said movement motor (28) stop on an emergency basis when the fact that the power supply to said operation motor (26) is not cut off is detected by said cutoff state monitoring device (42b) and said robot (24) enters a predetermined section of said route (22) including a section above said worker passage (16).

2. The robot system according to claim 1, wherein said emergency stop device (40, 44) comprises a robot position detection device (44) for outputting an emergency stop signal when detecting that said robot (24) is positioned in said predetermined section, a system power cutoff device (40) for cutting off the power supply to said operation motor (26) and said movement motor (28) in accordance with an emergency stop signal so as to stop said operation motor (26) and said movement motor (28), and an emergency stop signal invalidation device (42b) for invalidating said emergency stop signal from said robot position detection device (44) to said system power cutoff device (40) while the power supply to said operation motor (26) is cut off by said robot power cutoff device (40).

3. The robot system according to claim 2, wherein said robot system (10) further comprises a safe posture maintaining device (24a) for maintaining said robot (24) at a predetermined safe posture while said robot (24) is passing through said predetermined section, and a robot posture detection device (48; 48'; 48") for detecting whether or not said robot (24) is in a safe posture when said robot (24) is passing through said predetermined section, said robot posture detection device (48) outputting an emergency stop signal to said system power cutoff device (40) to cut off the power supply to said operation motor (26) and said movement motor (28) when detecting that said robot (24) is not in a safe posture.

4. The robot system according to claim 3, wherein said robot posture detection device (48) comprises a light curtain (48a) provided in said worker passage (16) so as to be interrupted when said robot (25) not in a safe posture cuts across said worker passage (16).

5. The robot system according to claim 3, wherein said robot posture detection device (48') is configured to compare a posture of said robot (24) determined from angle information of axes of said robot (24) when said robot (24) passes through said predetermined section and a safe posture stored in advance and output an emergency stop signal to said system power cutoff device (40) when judging that the posture of said robot (24) differs from said posture stored in advance.

6. The robot system according to claim 5, wherein said robot posture detection device (48") is configured so that the comparison of the posture of said robot (24) and said predetermined safe posture is performed independently by a plurality of processing devices (52) when said robot (24) passes through said predetermined section and so that an emergency stop signal is output to said system power cutoff device (40) when any processing device (52) judges that the posture of said robot (24) differs from said safe posture stored in advance.
